# EUROPÄISCHE PATENTSCHRIFT

(11) **EP 0 732 569 B1**
(45) Veröffentlichungstag und Bekanntmachung des Hinweises auf die Patenterteilung: **26.04.2000**
(21) Anmeldenummer: 96103863.5
(22) Anmeldetag: 12.03.1996
(51) Int. Cl.: G01G 9/00, G01N 23/16, G01B 15/02

(54) **Vorrichtung zur Flächengewichtsmessung**
Apparatus for measuring surface weight
Appareil pour mesurer le poids de surface

(30) Priorität: 17.03.1995 DE 19509642
(43) Veröffentlichungstag der Anmeldung: 18.09.1996
(73) Patentinhaber: HONEYWELL AG, 63067 Offenbach (DE)
(72) Erfinder: Bickert, Martin, Dr. rer. nat. Dipl.-Phys., 56179 Vallendar (DE)
(74) Vertreter: Herzbach, Dieter, Dipl.-Ing.

(56) Entgegenhaltungen:
- EP-A- 0 628 808
- DE-A- 2 800 925
- US-A- 3 154 685
- DATABASE WPI Section EI, Week 8431 Derwent Publications Ltd., London, GB; Class W04, AN 84-193196 XP002006805 & SU-A-997 555 (KIROVOGRAD AGRIC EQUIP) , 30.März 1984

## Beschreibung

Die vorliegende Erfindung bezieht sich auf eine Vorrichtung nach dem Gattungsbegriff des Patentanspruches 1.

In diesem Zusammenhang ist es bekannt, bei der On-Line-Flächengewichtsmessung von bahnförmigen Gütern, insbesondere von Papier, eine radioaktive Strahlungsquelle auf der einen Seite des Meßgutes und einen auf die radioaktive Strahlung ansprechenden Strahlungsdetektor auf der gegenüberliegenden Seite des Meßgutes anzuordnen. Als radioaktive Strahlungsquellen kommen β-Strahler, wie beispielsweise Promethium 147, Krypton 85 und Strontium 9() in Frage. Der Strahlungsdetektor kann aus einer Ionisationskammer oder einem Halbleiterdetektor bestehen. Durch die Messung der Transmission der von der radioaktiven β-Strahlungsquelle emittierten Elektronen kann das Flächengewicht bestimmt werden. Um ein befriedigendes Signal/Rausch-Verhältnis zu erzielen,muß die radioaktive Strahlungsquelle eine bestimmte Aktivität aufweisen. Andererseits besteht wegen der radioaktiven Strahlung der Wunsch, eine Quelle mit möglichst geringer Aktivität zu verwenden.

Eine gattungsgemäße Vorrichtung von der die vorliegende Erfindung ausgeht, ist aus der US-A-3 154 685 bekannt. Dort ist eine Meßvorrichtung dargestellt und beschrieben, bei der aus einer β-Strahlungsquelle austretende β-Teilchen ein Meßgut durchsetzen und auf einen Strahlungsdetektor auftreffen. Eine Magnetanordnung dient der seitlichen Auslenkung der β-Teilchen, wodurch die Strahlungsenergie einer hochenergetischen radioaktiven Quelle scheinbar vermindert wird.

Hiervon ausgehend ist es die Aufgabe der vorliegenden Erfindung, das Signal RauschVerhältnis bei gegebener Quellenaktivität zu verbessern. Die Lösung dieser Aufgabe gelingt gemäß den kennzeichnenden Merkmalen des Patentanspruches 1. Weitere vorteilhafte Ausgestaltungen der erfindungsgemäßen Vorrichtung sind den abhängigen Ansprüchen entnehmbar.

Die vorliegende Erfindung bezweckt eine Fokussierung der von der β-Strahlungsquelle emittierten Elektronen aufgrund des angeordneten Magnetfeldes und der durch dieses auf die Elektronen ausgeübten Lorentz-Kraft. Durch die Fokussierung der austretenden Elektronen im unteren Halbraum in Richtung auf das Meßgut stehen bei ursprünglich gleicher Aktivität der radioaktiven Quelle nunmehr erheblich mehr β-Teilchen zur Transmissionsmessung zur Verfügung.

Anhand der Figuren der beiliegenden Zeichnung sei im folgenden die erfindungsgemäße Vorrichtung näher erläutert, wobei:
- Figur 1: den grundsätzlichen Aufbau der erfindungsgemäßen Vorrichtung zur Flächengewichtsmessung; und
- Figur 2: die Einwirkung des Magnetfeldes auf die β-Teilchen zeigt.

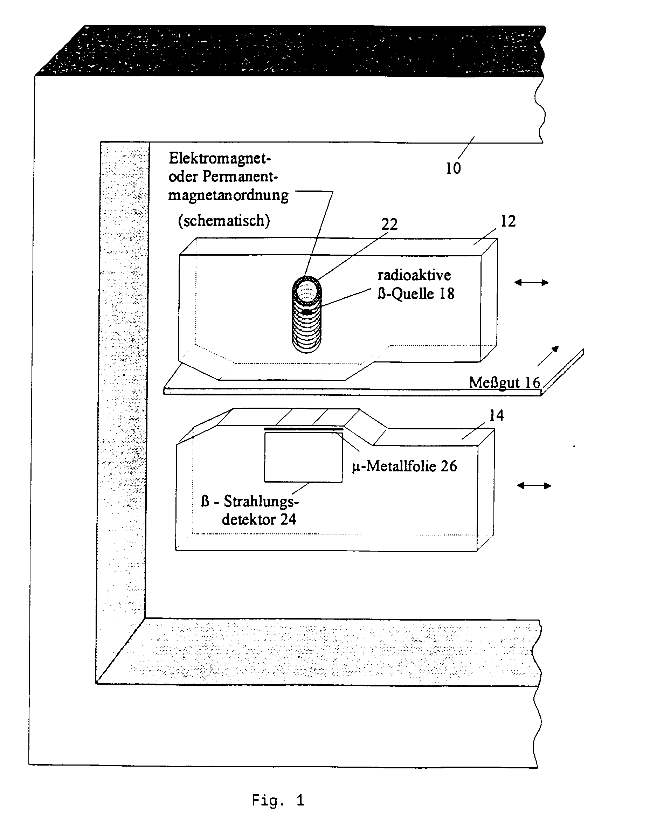

Gemäß Figur 1 ist an einem O-förmigen Meßrahmen 10 in nicht näher dargestellter Weise ein oberer Meßkopf 12 und ein unterer Meßkopf 14 beweglich gelagert. Die Meßköpfe 12 und 14 werden synchron in der durch den Doppelpfeil angedeuteten Richtung hin und her über das Meßgut 16 geführt, das in der angedeuteten Pfeilrichtung durch den Meßrahmen 10 verläuft.

Der obere Meßkopf 12 weist im Innern eine radioaktive β-Strahlungsquelle 18 auf, die in einem tubusförmigen Permanentmagneten oder Elektromagneten 22 angeordnet ist. Grundsätzlich kann jede Magnetanordnung verwendet werden, die ein Magnetfeld erzeugt, das im wesentlichen senkrecht zu dem Meßgut 16 und zu einem Strahlungsdetektor 24 verläuft.

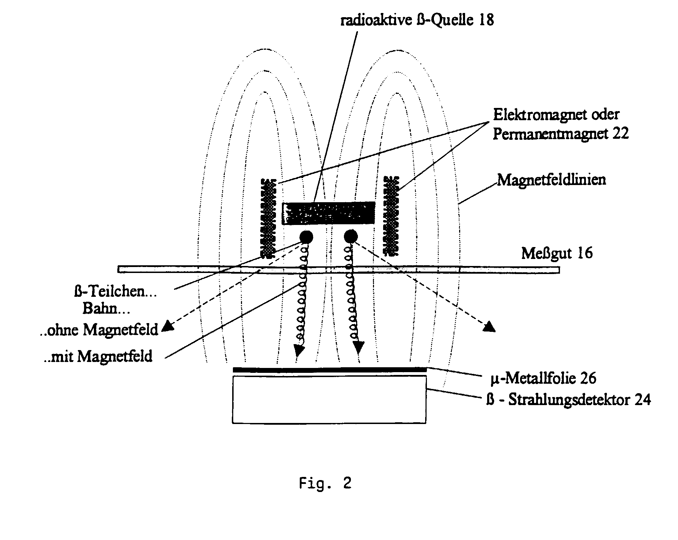

Gemäß Figur 2 werden durch das erzeugte Magnetfeld 20 alle β-Teilchen, d.h. die von der Strahlungsquelle 18 ausgehenden Elektronen im unteren Raumwinkel < 2Pi durch die entlang der Magnetfeldlinien auf die Elektronen einwirkende Lorentz-Kraft in Richtung auf das Meßgut 16 fokussiert. Somit steht bei ursprünglich gleicher Quellenaktivität nunmehr erheblich mehr β-Teilchen-Intensität aufdem Meßgut zur Transmissionsmessung zur Verfügung.

Der untere Meßkopf 14 weist den β-Strahlungsdetektor 24 auf, der in bekannter Weise eine Ionisationskammer oder ein Halbleiterdetektor sein kann. Auf dem Strahlungsdetektor 24 ist vorzugsweise eine µ-Metallfolie 26 angeordnet, um den β-Teilchen-Detektionsprozeß von dem äußeren Magnetfeld zu isolieren.

## Patentansprüche

1. Vorrichtung zur Flächengewichtsmessung von bahnförmigen Meßgütern (16), insbesondere von Papier, mit einer radioaktiven β-Strahlungsquelle (18) zur Aussendung von β-Teilchen auf der einen Seite des Meßgutes und einem β-Strahlungsdetektor (24) auf der anderen Seite des Meßgutes sowie mit einer Magnetanordnung (22) zur Erzeugung eines auf die β-Teilchen einwirkenden Magnetfeldes, **dadurch gekennzeichnet,** daß das erzeugte Magnetfeld (20) im wesentlichen senkrecht zu dem Meßgut (16) und zu dem Strahlungsdetektor (24)gerichtet ist, um die emittierten β-Teilchen in Richtung auf das Meßgut (16) zu fokussieren.

2. Vorrichtung nach Anspruch 1, **gekennzeichnet durch** die Anordnung eines Permanentmagneten (22).

3. Vorrichtung nach Anspruch 1, **gekennzeichnet durch** die Anordnung eines Elektromagneten.

4. Vorrichtung nach Anspruch 2 oder 3, **dadurch gekennzeichnet,** daß der Magnet (22) tubusförmig ausgestaltet ist und die β-Strahlungsquelle (18) innerhalb des Tubus angeordnet ist.

5. Vorrichtung nach Anspruch 1, **gekennzeichnet durch** eine vor dem β-Strahlungsdetektor (24) angeordnete µ-Metallfolie (26) zur Magnetfeldabschirmung.

## Claims

1. Device for measuring the basis weight of webshaped materials to be measured (16), in particular paper, having a radioactive β-source (18) for emitting β-particles on one side of the material to be measured, and a β-radiation detector (24) on the other side of the material to be measured, and having a magnet arrangement (22) for generating a magnetic field acting on the β-particles, characterized in that the generated magnetic field (20) is directed essentially perpendicular to the material to be measured (16) and to the radiation detector (24), in order to focus the emitted β-particles in the direction of the material to be measured (16).

2. Device according to Claim 1, characterized by the arrangement of a permanent magnet (22).

3. Device according to Claim 1, characterized by the arrangement of an electromagnet.

4. Device according to Claim 2 or 3, characterized in that the magnet (22) is of tubular shape, and the β-radiation source (18) is arranged inside the tube.

5. Device according to Claim 1, characterized by a u-metal foil (26) for magnetic-field screening arranged upstream of the β-radiation detector (24).

## Revendications

1. Appareil pour la mesure du poids surfacique de matériaux à mesurer (16) sous forme de bandes, en particulier de papier, avec une source radioactive de rayonnement β (18) pour émettre des particules β sur une des faces du matériau à mesurer et un détecteur de rayonnement β sur l'autre face du matériau à mesurer, et aussi avec un arrangement magnétique (22) pour générer un champ magnétique agissant sur les particules β, caractérisé en ce que le champ magnétique (20) est essentiellement dirigé perpendiculairement au matériau à mesurer (16) et au détecteur de rayonnement β (24) pour y focaliser les particules β émises en direction du matériau à mesurer (16).

2. Appareil selon la revendication 1, caractérisé en ce qu'il dispose d'un aimant permanent (22).

3. Appareil selon la revendication 1, caractérisé en ce qu'il dispose d'un électro-aimant.

4. Appareil selon la revendication 2 ou 3, caractérisé en ce que l'aimant (22) est de forme tubulaire et en ce que la source de rayonnement β (18) est disposée à l'intérieur du tube.

5. Appareil selon la revendication 1, caractérisé par une feuille de µ-métal (26) disposée devant le détecteur de rayonnement β (24) comme blindage contre le champ magnétique.
